# EUROPÄISCHE PATENTSCHRIFT

(11) **EP 2 726 347 B1**
(45) Veröffentlichungstag und Bekanntmachung des Hinweises auf die Patenterteilung: **22.07.2015**
(21) Anmeldenummer: 12728528.6
(22) Anmeldetag: 19.06.2012
(51) Int. Cl.: B60T 8/17, B60T 1/10, B60T 7/04

(54) **VERFAHREN ZUM STEUERN EINER REKUPERATIONSVORRICHTUNG EINES FAHRZEUGS**
METHOD FOR CONTROLLING A RECUPERATION DEVICE OF A VEHICLE
PROCÉDÉ DE COMMANDER D?UN DISPOSITIF DE RÉCUPÉRATION D'UN VÉHICULE

(30) Priorität: 30.06.2011 DE 102011078436
(43) Veröffentlichungstag der Anmeldung: 07.05.2014
(73) Patentinhaber: Bayerische Motoren Werke Aktiengesellschaft, 80809 München (DE)
(72) Erfinder: PLATZ, Christoph, 85716 Unterschleißheim (DE); EBNER, Christian, 80997 Muenchen (DE); HAMM, Markus, 85737 Ismaning (DE)
(86) Internationale Anmeldenummer: PCT/EP2012/061624
(87) Internationale Veröffentlichungsnummer: WO 2013/000755

(56) Entgegenhaltungen:
- EP-A1- 1 547 891
- EP-A1- 2 314 486

## Beschreibung

Die vorliegende Erfindung betrifft ein Verfahren gemäß dem Oberbegriff des Patentanspruchs 1.

Fahrzeughersteller setzen derzeit in verstärktem Maße auf Fahrzeuge mit neuen und alternativen Antriebskonzepten, insbesondere Hybridantriebe oder reine Elektroantriebe, anstelle reiner Verbrennungsmotoren.

Um einen Wirkungsgrad der neuen Antriebe zu erhöhen sind verschiedene Systeme zur Einsparung von Energie aber auch zur Rückgewinnung von Energie bekannt, insbesondere zur Rückgewinnung von elektrischer Energie aus kinetischer Energie.

So ist beispielsweise aus der DE 10 2008 017 480 eine Fahrzeugbremsanlage für PKWs beschrieben, bei der ein Bremsmoment durch einen Elektromotor erzeugt wird, um hieraus rekuperativ elektrische Energie bereitzustellen. Diese wird üblicherweise in Energiespeichern, wie beispielsweise Akkumulatoren oder Kondensatoren zwischengespeichert.

Des Weiteren ist insbesondere für Motorräder oder Roller aus der DE 10 2009 040 169 ein Bremssystem bekannt, das sich durch einen das Fahrzeug antreibenden Elektromotor auszeichnet, dessen Antriebswelle mit einer Hinterachse des Fahrzeugs verbunden ist und außerdem eine Regeleinheit vorgesehen ist, die derart konfiguriert ist, dass sie bei Betätigung einer Primärbetätigungseinrichtung den Elektromotor als Generator zur Erzeugung eines rekuperativen Bremsmoments auf die Hinterachse betreibt.

Aus der EP 2 314 486 A1 ist ein Bremssystem bekannt, welches mittels einer Steuerungseinheit das Bremssignal eines Bremspedals variabel auf eine mechanische und eine regenerative Bremsvorrichtung verteilt, um eine möglichst hohe Rekuperationswirkung zu erzielen.

Es ist Aufgabe der Erfindung ein verbessertes Verfahren zur Steuerung einer Rekuperationsvorrichtung eines Fahrzeugs bereitzustellen, welche dem Fahrer eine möglichst einfache Handhabung der Rekuperationsvorrichtung ermöglicht.

Die Aufgabe wird erfindungsgemäß gelöst mit einem Verfahren gemäß dem Gegenstand des Patentanspruchs 1. Vorteilhafte Ausgestaltungen ergeben sich aus den Unteransprüchen.

Demnach wird ein Verfahren zum Steuern einer Rekuperationsvorrichtung zur Wandlung von kinetischer Energie in elektrische Energie in einem Fahrzeug mit den folgenden Schritten vorgeschlagen:
- Betätigen mindestens eines Betätigungselementes des Fahrzeugs zum Erzeugen einer Bremswirkung von mindestens zwei Betätigungselementen des Fahrzeugs"
- zumindest kurzzeitiges Anordnen des betätigten Betätigungselements in mindestens einer vordefinierten ersten Auslöseposition,
- Aktivieren der Rekuperationsvorrichtung in einem definierten Funktionsumfang in Reaktion auf das zumindest kurzzeitige Anordnen des betätigten Betätigungselements in der mindestens einen vordefinierten ersten Auslöseposition.

Außerdem umfasst das mindestens eine Betätigungselement mindestens ein Element aus einer Gruppe bestehend aus einem Betätigungselement für eine Antriebsbetätigung und/oder ein Betätigungselement für eine Bremsenbetätigung.

Zusätzlich ist bei den mindestens zwei Betätigungselementen des Fahrzeugs jeweils ein Anteil an einer maximalen Rekuperation des Fahrzeugs zugeordnet und mittels diesem aktivierbar ist, so dass lediglich durch Zusammenwirken der einzelnen Betätigungselemente eine Erhöhung einer Rekuperationswirkung über den jeweils einzeln zugeordneten Anteil hinaus erfolgt

Dies bedeutet, dass eine Betätigung des mindestens einen Betätigungselements zur Antriebsbetätigung, also zur Steuerung bzw. Regelung des Fahrzeugantriebs, und/oder zur Betätigung der Bremsen des Fahrzeugs einerseits eine Bewegung des jeweiligen Betätigungselements selbst zur Folge hat. Andererseits wird in beiden Fällen eine Verlangsamung des Fahrzeugs durch Rücknahme einer Antriebsbetätigung bzw. eine Betätigung einer Bremsvorrichtung bewirkt. Das jeweilige Betätigungselement ist derart konfiguriert, dass dieses aufgrund seiner Betätigung in die vordefinierte Position bewegt wird und hierdurch die Aktivierung der Rekuperationsvorrichtung erfolgt.

Es kann somit eine Überlagerung der eigentlich vorgesehenen Funktion des jeweiligen Betätigungselements mit der aktivierten Rekuperation stattfinden oder alternativ eine aufeinanderfolgende Aktivierung, wie sie nachfolgend näher beschrieben wird.

Vorzugsweise erfolgt der Schritt des zumindest kurzzeitigen Anordnens gleichzeitig während des Schrittes des Betätigens des mindestens einen Betätigungselements bzw. infolge dessen. Dies bietet den Vorteil, dass die von dem Fahrer vorzunehmenden Schritte zur Aktivierung der Rekuperation bereits durch den gewohnten Handlungsablauf zum Verlangsamen des Fahrzeugs erfolgen bzw. mit diesem gekoppelt sind. Folglich erfolgt die Rekuperation ohne ein erforderliches Eingreifen des Fahrers, so dass die Rekuperation häufiger aktiviert werden kann.

Die Aktivierung kann derart erfolgen, dass die Rekuperationsvorrichtung eine maximal mögliche Rekuperationswirkung bereitstellt oder lediglich einen Anteil hiervon. Insbesondere kann der Anteil in Abhängigkeit von einem momentanen Bewegungsumfang des Betätigungselements geregelt werden. Wird beispielsweise das Betätigungselement in eine erste vordefinierte Auslöseposition bewegt, so erfolgt eine Aktivierung mit einem ersten Wert der Rekuperationswirkung, welcher kleiner als ein maximaler Wert der Rekuperation ist. Wird die Bewegung des Betätigungselements fortgesetzt, so erhöht sich die Rekuperationswirkung in Abhängigkeit von dem Bewegungsumfang bis auf einen vordefinierten maximalen Wert. Außerdem können der bzw. die Werte neben ihrer Vorabdefinition auch durch einen Fahrer regelbar, insbesondere bedarfsabhängig, regelbar sein. Somit kann der Fahrer einstellen, wie stark das Fahrzeug bei der Betätigung eines oder mehrerer Bedienelemente verzögert.

In jedem Fall kann als maximal möglicher Wert für eine Rekuperation ein Verzögerungswert zwischen 0 und 100% vorgesehen werden, wobei 100% einer Vollbremsung entspricht und somit eine Bremswirkung mittels der Rekuperationsvorrichtung erzielt wird, wie beim vollständigen Bremsen mit einer konventionellen Fahrzeugbremse.

Gemäß einer Ausführungsform ist das Betätigen des mindestens einen Betätigungselements ein Rückstellen eines Betätigungselements für eine Antriebsbetätigung in eine Neutralstellung, wobei die Neutralstellung durch einen Anschlag definiert ist, und/oder umfasst ein Betätigen eines Betätigungselement für eine Bremsenbetätigung, insbesondere das Betätigen eines Bremshebels, eines Bremspedals und/oder einer Fußbremse.

Dies bedeutet, dass die Rekuperationsvorrichtung aktiviert werden kann, indem ein Betätigungselement zur Antriebsbetätigung in eine Neutralstellung gebracht wird. Die Neutralstellung wird üblicherweise durch einen Anschlag festgelegt, so dass das Betätigungselement in diese Neutralstellung automatisch zurückgestellt wird, sobald keine Betätigung durch einen Fahrer erfolgt. In der Neutralstellung wird somit aufgrund der Rekuperation ein Bremsmoment erzeugt, entsprechend einem sogenannten Schlepp- bzw. Bremsmoment eines Verbrennungsmotors. Eine Rückstellkraft für das Betätigungselement wird beispielsweise durch Rückstellfedern bereitgestellt. Unter dem Betätigungselement für eine Antriebsbetätigung ist jedes Bauteil zum aktiven Regeln einer Fahrzeuggeschwindigkeit bzw. eines Antriebsmoments im Sinne dieser Beschreibung zu verstehen, das also zum "Gasgeben" geeignet ist, insbesondere ein Fahrpedal, ein Fahr(wert)geber bzw. Fahrsteller oder ein Drehgriff (beispielsweise beim Motorrad).

Zusätzlich oder alternativ kann, wie beschrieben, die Rekuperationsvorrichtung durch Betätigen eines Betätigungselements für eine Bremsenbetätigung aktiviert werden. Dies erfolgt beispielsweise durch Betätigung des Bremshebels, des Bremspedals oder der sogenannten Fußbremse. Bei Betätigen mindestens eines dieser Elemente erfolgt grundsätzlich eine Reduzierung der Fahrzeuggeschwindigkeit durch aktives Bremsen des Fahrzeugs. Jedoch kann das Betätigungselement derart ausgestaltet sein, dass ein vordefinierter erster Abschnitt eines Betätigungsumfangs die mindestens eine vordefinierte erste Auslöseposition, bzw. eine Mehrzahl dieser Auslösepostionen, definiert und zunächst lediglich die Aktivierung der Rekuperationsvorrichtung bewirkt. Erst ein Betätigen des Betätigungselements über diesen ersten Abschnitt hinaus führt zur eigentlichen Aktivierung der zugehörigen Fahrzeugbremse.

Dies bedeutet, dass das Betätigen des mindestens einen Betätigungselements gemäß einer weiteren Ausführungsform ein Aktivieren mindestens einer Bremsvorrichtung des Fahrzeugs umfassen kann, sobald das mindestens eine Betätigungselement in mindestens einer zweiten vordefinierten Position angeordnet wird.

Mit anderen Worten ausgedrückt, kann ein gewisser "Totweg" definiert oder ein bestehender "Totweg" genutzt werden, um in dem ersten Abschnitt die Aktivierung der Rekuperationsvorrichtung vorzusehen. Auch für diese Ausführungsform kann selbstverständlich ein Umfang einer Rekuperationswirkung von dem Bewegungsumfang des Betätigungselements abhängig gemacht werden, um die Rekuperationswirkung dosierbar zu machen.

Wie beschrieben, kann ebenso eine Überlagerung der Rekuperationsbetätigung mit einer gleichzeitigen Betätigung der eigentlichen Funktion des Betätigungselements einhergehen bzw. vorgesehen werden.

Gemäß einer anderen Ausführungsform ist jedem der mindestens einen Betätigungselemente ein definierbarer Anteil einer maximalen Rekuperation des Fahrzeugs zugeordnet und mittels diesem aktivierbar. Dies bedeutet, dass jeweils einem Betätigungselement lediglich ein vordefinierter Anteil an der maximalen Rekuperationswirkung zugeteilt ist. Diese Vordefinition kann entweder einen festen Standardwert umfassen oder beispielsweise durch einen Fahrer variiert und angepasst und somit vorgegeben werden. Durch Betätigung des Betätigungselements kann also nur dieser Anteil maximal aktiviert werden. Eine Aktivierung darüber hinaus ist nicht möglich. Wie voranstehend beschrieben, kann jedoch die mit dem Betätigungselement erzielte momentane Rekuperationswirkung in Abhängigkeit von dessen Bewegungsumfang dosiert bzw. geregelt werden.

Beispielsweise kann also jeweils ein Anteil an einer maximalen Rekuperation mindestens zwei Betätigungselementen des Fahrzeugs zugeordnet sein. Grundsätzlich können hierbei beliebige Anteile vorgesehen werden. Diese müssen in Summe nicht zwangsläufig 100% ergeben, sondern können auch eine geringere Summe aufweisen. Vorzugsweise kann ein Anteil von jeweils 1/2 der maximalen Rekuperation bzw. Rekuperationswirkung zwei definierten Betätigungselementen oder kann ein Anteil von jeweils 1/3 der maximalen Rekuperation drei definierten Betätigungselementen zugeordnet sein.

Dies bedeutet, dass lediglich durch Zusammenwirken der einzelnen Betätigungsvorrichtungen eine Erhöhung der Rekuperationswirkung über den einzeln zugeordneten Anteil hinaus möglich ist. Sind also beispielsweise dem Drehgriff, dem ersten Bremshebel und dem zweiten Bremshebel jeweils ein Anteil von 1/3 an der maximalen Rekuperationswirkung zugeordnet, so bewirkt ein Rückstellen des Drehgriffs in seine Neutralstellung eine Aktivierung der Rekuperationsvorrichtung in einem beschränkten Funktionsumfang mit einem Anteil von lediglich 1/3 der maximalen Rekuperationswirkung. Ein Betätigen des ersten und/oder des zweiten Bremshebels erhöht die Rekuperationswirkung nochmals um jeweils 1/3.

Selbstverständlich können die Betätigungselemente unabhängig voneinander insbesondere in beliebiger Reihenfolge betätigt werden, um die Rekuperationswirkung für einen Fahrer variierbar zu machen.

Es ist außerdem möglich mindestens ein weiteres zusätzliches Bedienelement vorzusehen, welchem ebenfalls ein Anteil einer Rekuperation zugeordnet ist. Wird dieses zusätzlich zu einem der voranstehend beschriebenen Betätigungselemente betätigt, so wird der zusätzliche Anteil aktiviert und somit ein Gesamtwert für die Rekuperation erhöht werden. Auf diese Weise kann eine einfachere Verteilung der Anteile und somit eine leichtere Handhabung und Dosierbarkeit für den Fahrer erzielt werden.

Gemäß einer weiteren Ausführungsform kann das Verfahren außerdem einen Schritt zum Erkennen des zumindest kurzzeitigen Anordnens des betätigten Betätigungselements in der mindestens einen vordefinierten ersten Auslöseposition, sowie einen nachfolgenden Schritt eines Auslösens eines Signals zur Aktivierung der Rekuperationsvorrichtung in Reaktion auf das zumindest kurzfristige Anordnen des betätigten Betätigungselements in der mindestens einen vordefinierten ersten Auslöseposition umfassen und der Schritt des Aktivierens der Rekuperationsvorrichtung in Reaktion auf das erzeugte Signal zur Aktivierung erfolgen.

Dies bedeutet, dass entsprechende Sensoren oder Vorrichtungen zum Durchführen des Erkennungsschritts vorgesehen und mit einem entsprechenden Steuergerät wirkgekoppelt sind, so dass in Folge eines positiven Erkennens ein entsprechendes Signal erzeugt werden kann, um eine Aktivierung in Reaktion auf dieses Signal durchzuführen. Das beschriebene Fahrzeug kann insbesondere ein Motorrad, ein Motorroller, ein Trike, ein Quad oder ein motorradähnliches Fahrzeug sein. Als motorradähnliches Fahrzeug ist beispielsweise jedes 2, 3 oder 4-rädrige oder mehrrädrige Motorrad zu verstehen.

Vorzugsweise kann das beschriebene Erkennen einer Anordnung des betätigten Betätigungselements eine Längenwegmessung und/oder eine Druckmessung in einer mit dem Betätigungselement gekoppelten hydraulischen Druckleitung umfassen, insbesondere eine Verwendung eines Weggebers und/oder eines Winkelmessers. Auf diese Weise kann auf einfachem Wege ein Bewegungsumfang bzw. eine aktuelle Position des jeweiligen Betätigungselements bestimmt werden, um die beschriebenen Schritte des erfindungsgemäßen Verfahrens durchzuführen.

Die Erfindung wird nachfolgend unter Bezugnahme auf die Zeichnung anhand eines Ausführungsbeispiels näher erläutert.

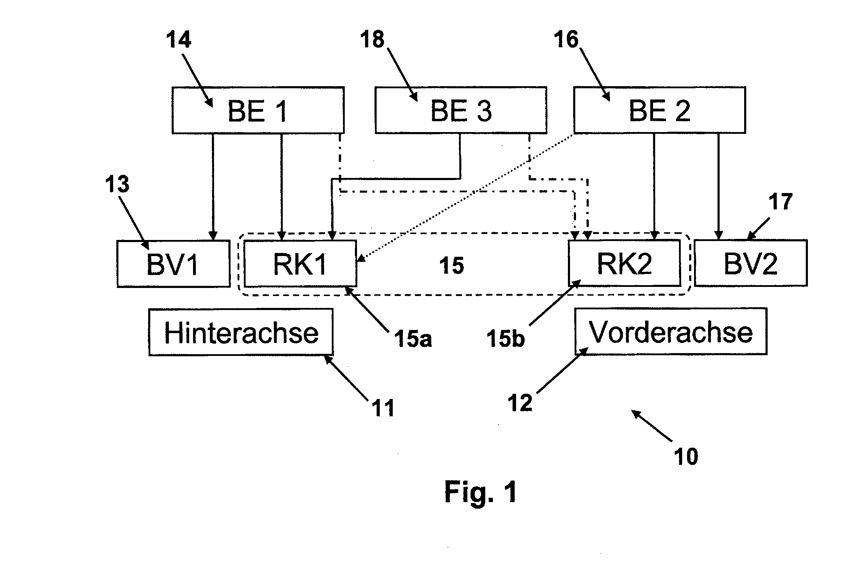

Fig. 1 zeigt eine schematische Anordnung zur Durchführung einer Ausführungsform des erfindungsgemäßen Verfahrens zur Steuerung einer Rekuperationsvorrichtung zur Wandlung von kinetischer Energie in elektrische Energie. Ein Fahrzeug 10 umfasst demnach eine Hinterachse 11 und eine Vorderachse 12. Der Hinterachse 11 ist eine hintere erste Bremsvorrichtung 13 zugeordnet, welche über ein erstes Betätigungselement 14 zur Bremsenbetätigung betätigbar ist. Das erste Betätigungselement 14 ist darüber hinaus derart konfiguriert, dass ein Betätigen des ersten Betätigungselements 14 in mindestens eine vordefinierte erste Auslöseposition eine zumindest teilweise Aktivierung einer Rekuperationsvorrichtung 15 umfasst. Die Rekuperationsvorrichtung 15 umfasst in der dargestellten Ausführungsform einen hinteren Anteil 15a, welcher der Hinterachse 11 zugeordnet ist. Lediglich optional kann darüber hinaus ein vorderer Anteil 15b der Rekuperationsvorrichtung 15 vorgesehen sein, welcher der Vorderachse 12 zugeordnet ist. Dieser vordere Anteil 15b der Rekuperationsvorrichtung 15 kann mittels eines vorderen zweiten Betätigungselements 16 zur Bremsenbetätigung aktiviert werden. Das vordere Betätigungselement 16 ist darüber hinaus zur Betätigung einer vorderen Bremsvorrichtung 17 vorgesehen. Ebenfalls optional kann das vordere zweite Betätigungselement 16 auch zur Betätigung des hinteren Anteils 15a ausgebildet sein (gestrichelter Pfeil).

Des Weiteren ist ein drittes Betätigungselement 18 zur Antriebsbetätigung vorgesehen. Dieses kann durch Rückstellung aus einer zum Antrieb des Fahrzeugs 10 vorgesehenen Betätigungsstellung (nicht dargestellt) in eine Neutralstellung gebracht werden, welche durch einen Anschlag definiert wird. Die Rückstellung in die Neutralstellung bewirkt ebenfalls eine zumindest anteilige Aktivierung der Rekuperationsvorrichtung 15, insbesondere des hinteren Anteils 15a. Selbstverständlich kann ebenso eine Aktivierung des vorderen Anteils 15b alternativ oder zusätzlich erfolgen (gestrichelter Pfeil).

Ebenfalls optional kann das die Rekuperationsvorrichtung 15 aktivierende erste Betätigungselement 14 derart konfiguriert sein, dass eine Aktivierung des vorderen Anteils 15b alternativ oder zusätzlich erfolgen kann.

## Patentansprüche

1. Verfahren zum Steuern einer Rekuperationsvorrichtung zur Wandlung von kinetischer Energie in elektrische Energie in einem Fahrzeug mit den folgenden Schritten:
- Betätigen mindestens eines Betätigungselementes zum Erzeugen einer Bremswirkung von mindestens zwei Betätigungselementen des Fahrzeugs,
- zumindest kurzzeitiges Anordnen des betätigten Betätigungselements in mindestens einer vordefinierten ersten Auslöseposition,
- Aktivieren der Rekuperationsvorrichtung in einem definierten Funktionsumfang in Reaktion auf das kurzzeitige Anordnen des betätigten Betätigungselements in der mindestens einen vordefinierten ersten Auslöseposition,
**dadurch gekennzeichnet, dass**
das mindestens eine Betätigungselement mindestens ein Element aus einer Gruppe bestehend aus einem Betätigungselement für eine Antriebsbetätigung und/oder für eine Bremsenbetätigung umfasst,
wobei den mindestens zwei Betätigungselementen des Fahrzeugs jeweils ein Anteil an einer maximalen Rekuperation des Fahrzeugs zugeordnet und mittels diesem aktivierbar ist, so dass lediglich durch Zusammenwirken der einzelnen Betätigungselemente eine Erhöhung einer Rekuperationswirkung über den jeweils einzeln zugeordneten Anteil hinaus erfolgt.

2. Verfahren nach Anspruch 1, **dadurch gekennzeichnet, dass** das Betätigen des mindestens einen Betätigungselements ein Rückstellen eines Betätigungselements für eine Antriebsbetätigung in eine Neutralstellung ist, wobei die Neutralstellung durch einen Anschlag definiert ist, und/oder ein Betätigen eines Betätigungselement für eine Bremsenbetätigung, insbesondere das Betätigen eines Bremshebels, eines Bremspedals und/oder einer Fußbremse, umfasst.

3. Verfahren nach Anspruch 1 oder 2, **dadurch gekennzeichnet, dass** das Betätigen des mindestens einen Betätigungselements ein Aktivieren mindestens einer Bremsvorrichtung des Fahrzeugs umfasst, sobald das mindestens eine Betätigungselement in mindestens einer zweiten vordefinierten Position angeordnet wird.

4. Verfahren nach einem der Ansprüche 1 bis 3, **dadurch gekennzeichnet, dass** jeweils ein Anteil an einer maximalen Rekuperation mindestens zwei Betätigungselementen des Fahrzeugs zugeordnet ist, insbesondere ein Anteil von jeweils 1/2 der maximalen Rekuperation zwei definierten Betätigungselementen, oder ein Anteil von jeweils 1/3 der maximalen Rekuperation drei definierten Betätigungselementen.

5. Verfahren nach einem der Ansprüche 1 bis 4, **dadurch gekennzeichnet, dass** das Verfahren außerdem einen Schritt zum Erkennen des zumindest kurzzeitigen Anordnens des betätigten Betätigungselements in der mindestens einen vordefinierten ersten Auslöseposition, sowie einen nachfolgenden Schritt eines Auslösens eines Signals zur Aktivierung der Rekuperationsvorrichtung in Reaktion auf das zumindest kurzfristige Anordnen des betätigten Betätigungselements in der mindestens einen vordefinierten ersten Auslöseposition umfasst und der Schritt des Aktivierens der Rekuperationsvorrichtung in Reaktion auf das erzeugte Signal zur Aktivierung erfolgt.

6. Verfahren nach einem der Ansprüche 1 bis 5, **dadurch gekennzeichnet, dass** das Fahrzeug ein Motorrad, ein Motorroller, ein Trike, ein Quad oder ein motorradähnliches Fahrzeug ist.

7. Verfahren nach einem der Ansprüche 1 bis 6, **dadurch gekennzeichnet, dass** das Erkennen einer Anordnung des betätigten Betätigungselements eine Längenwegmessung und/oder eine Druckmessung in einer mit dem Betätigungselement gekoppelten Druckleitung umfasst, insbesondere eine Verwendung eines Weggebers und/oder eines Winkelmessers.

## Claims

1. A method for controlling a recuperation device for converting kinetic energy into electric energy in a vehicle, the method having the following steps:
- actuating at least one actuating element to produce a braking effect of at least two actuating elements of the vehicle,
- at least briefly arranging the actuated actuating element in at least one predefined first trigger position,
- activating the recuperation device in a defined functional scope in response to the brief arrangement of the actuated actuating element in the at least one predefined first trigger position,
**characterised in that**
the at least one actuating element comprises at least one element from a group consisting of an actuating element for a drive actuation and/or for a brake actuation,
wherein a proportion of a maximum recuperation of the vehicle is assigned to the at least two actuating elements of the vehicle, in each case, and can be activated thereby, so that an increase in a recuperation effect beyond the respectively individually assigned proportion only takes place by cooperation of the individual actuating elements.

2. A method according to claim 1, **characterised in that** the actuation of the at least one actuating element is a resetting of an actuating element for a drive actuation into a neutral position, wherein the neutral position is defined by a stop, and/or comprises an actuation of an actuating element for a brake actuation, especially the actuation of a brake lever, a brake pedal and/or a foot brake.

3. A method according to claim 1 or claim 2, **characterised in that** the actuation of the at least one actuating element comprises an activation of at least one braking device of the vehicle, as soon as the at least one actuating element is arranged in at least one second predefined position.

4. A method according to any one of claims 1 to 3, **characterised in that** a proportion of a maximum recuperation is assigned, in each case, to at least two actuating elements of the vehicle, especially a proportion of, in each case, 1/2 of the maximum recuperation is assigned to two defined actuating elements, or a proportion of, in each case, 1/3 of the maximum recuperation is assigned to three defined actuating elements.

5. A method according to any one of claims 1 to 4, **characterised in that** the method also comprises a step for recognising the at least brief arrangement of the actuated actuating element in the at least one predefined first trigger position, as well as a following step of triggering a signal to activate the recuperation device in response to the at least brief arrangement of the actuated actuating element in the at least one predefined first trigger position, and the step of activating the recuperation device takes place in response to the signal produced for activation.

6. A method according to any one of claims 1 to 5, **characterised in that** the vehicle is a motorcycle, a motor scooter, a trike, a quad or a vehicle similar to a motorcycle.

7. A method according to any one of claims 1 to 6, **characterised in that** the recognition of an arrangement of the actuated actuating element comprises a longitudinal path measurement and/or a pressure measurement in a pressure line coupled to the actuating element, in particular a use of a displacement sensor and/or an angle measuring device.

## Revendications

1. Procédé de commande d'un dispositif de récupération permettant de transformer de l'énergie cinétique en énergie électrique dans un véhicule comprenant les étapes consistant à :
- actionner au moins un élément d'actionnement pour obtenir une action de freinage d'au moins deux éléments d'actionnement du véhicule,
- mise en place, au moins temporaire, de l'élément d'actionnement actionné dans au moins une première position de déclenchement prédéfinie,
- activation du dispositif de récupération dans un environnement fonctionnel défini en réaction avec la mise en place temporaire de l'élément d'actionnement actionné dans la première position de déclenchement prédéfinie,
**caractérisé en ce que**
l'élément d'actionnement comprend au moins un élément choisi dans le groupe constitué par un élément d'actionnement pour un actionnement d'entraînement et/ou pour un actionnement de freinage, et
à au moins deux éléments d'actionnement du véhicule est respectivement associée une fraction d'une récupération maximum du véhicule et peut être activée par celle-ci de sorte qu'une augmentation de l'action de récupération allant au-delà de la fraction ainsi séparément associée ne puisse être obtenue que par coopération des différents éléments d'actionnement.

2. Procédé conforme à la revendication 1,
**caractérisé en ce que**
l'actionnement de l'élément d'actionnement est un rappel d'un élément d'actionnement d'un actionnement d'entrainement dans une position neutre, cette position neutre étant définie par une butée, et/ou comprend un actionnement d'un élément d'actionnement d'un actionnement de freinage, en particulier l'actionnement d'une pédale de frein, d'un frein à pédale et/ou d'un frein de service.

3. Procédé conforme à la revendication 1 ou 2,
**caractérisé en ce que**
l'actionnement de l'élément d'actionnement comprend l'activation d'au moins un dispositif de freinage du véhicule dès que l'élément d'actionnement se trouve dans au moins une seconde position prédéfinie.

4. Procédé conforme à l'une des revendications 1 à 3,
**caractérisé en ce qu'**
une fraction respective d'une récupération maximum est associée à au moins deux éléments d'actionnement du véhicule, en particulier une fraction de respectivement 1/2 de la récupération maximum est associée à deux éléments d'actionnement définis ou une fraction de respectivement 1/3 de la récupération maximum est associée à trois éléments d'actionnement définis.

5. Procédé conforme à l'une des revendications 1 à 4,
**caractérisé en ce qu'**
il comprend en outre une étape permettant de reconnaitre la mise en place au moins temporairement de l'élément d'actionnement actionné dans la première position de déclenchement prédéfinie ainsi qu'une étape ultérieure de déclenchement d'un signal pour activer le dispositif de récupération en réaction à la mise en place au moins temporaire de l'élément d'actionnement actionné dans la première position de déclenchement prédéfinie et l'étape d'activation du dispositif de récupération s'effectue en réaction au signal d'activation produit.

6. Procédé conforme à l'une des revendications 1 à 5,
**caractérisé en ce que**
le véhicule est une moto, un scooter, un tricycle, un quad ou un véhicule motorisé similaire.

7. Procédé conforme à l'une des revendications 1 à 6,
**caractérisé en ce que**
la reconnaissance de la mise en place de l'élément d'actionnement actionné renferme une mesure de déplacement longitudinal et/ou une mesure de pression dans une conduite de pression accouplée à l'élément d'actionnement, en particulier l'utilisation d'un capteur de déplacement et/ ou d'un capteur d'angle.
